# EUROPEAN PATENT APPLICATION

(11) **EP 2 808 728 A1**
(43) Date of publication of application: **03.12.2014**
(21) Application number: 13169815.1
(22) Date of filing: 29.05.2013
(51) Int. Cl.: G02F 1/1333

(54) **Frame structure, display device with the frame structure, and method of fabricating the display device**

(71) Applicant: Top Victory Investments Ltd., Kowloon, Hong Kong (CN)
(72) Inventor: Lee, Kun-Neng, New Taipei City Post Code: 23553 (TW); Hsu, Shiau-Rung, New Taipei City Post Code: 23553 (TW); Lee, Chuan-Fa, New Taipei City Post Code: 23511 (TW); Yang, Chih-Yu, New Taipei City Post Code: 23553 (TW); Yi, Wei-Lin, New Taipei City Post Code: 23511 (TW); Chen, Uei-Uen, New Taipei City Post Code: 23511 (TW)
(74) Representative: Chaillot, Geneviève

(57) **Abstract**

The preset invention provides a frame structure (10), a display device with the frame structure, and a method of fabricating the display device. The frame structure includes a first frame (100) and a second frame (200). The first frame (100) includes two lateral portions (101) opposite to each other, and a top portion (102) and a bottom portion (103) opposite to each other. A first engaging component is disposed on the lateral portion. The second frame (200) is disposed around the first frame (100). The second frame (200) includes a top plank (202) and two lateral planks (201). The top plank (202) is disposed corresponding to the top portion (102), and the lateral plank (201) is disposed corresponding to the lateral portion (101). A second engaging component is disposed on the lateral plank (201). The second engaging component is slidably engaged with the first engaging component. Thus, the present invention can decrease thickness of the frame structure and the display device for preferable aesthetic and low cost.

## Description

### Background of the Invention

### 1. Field of the Invention

The present invention relates to a frame structure, a display device with the frame structure and a method of fabricating the display device, and more particularly, to a frame structure having slidably engaging function, the display device with the frame structure and the method of fabricating the display device.

### 2. Description of the Prior Art

A conventional display device includes a display module and an outer frame. The display module includes a display panel and a backlight module connected to each other. A plastic rim is disposed on a boundary of the backlight module for fixing components of the backlight module. The display panel includes a display surface and an incident surface opposite to each other. The backlight module includes a light emitting surface, which is adjacent to the incident surface. The backlight module further includes a back panel disposed on a surface opposite to the light emitting surface. The outer frame is assembled with the display module at a positive direction, and the positive direction faces toward the display surface, which means an assembly direction of the outer frame is parallel to a normal of the display surface. When the outer frame is assembled with the display module, a plurality of holes formed on the outer frame aligns with a plurality of threaded holes formed on the plastic rim. The screws pass through the holes to lock inside the threaded hole, so as to fix the outer frame on the plastic rim.

### Summary of the Invention

The conventional display device has drawbacks of large structure and inconvenient assembly. The plastic rim has to form the corresponding threaded hole structure on the plastic rim, so that a thickness of the plastic rim is set according to dimensions of the threaded hole structure, which results in large volume of the display device. Design of a thin rim can not be applied to the conventional display device, and the conventional display device is inaesthetic. Further, a plurality of screws is utilized to fix the outer frame on the plastic rim, and assembly of the conventional display device is complicated.

The present invention provides a frame structure, a display device with the frame structure, and a method of fabricating the display device for solving above conventional drawbacks, such as thickness decrease of the plastic rim, preferred aesthetic, faster assembly and low manufacturing cost.

According to the claimed invention, a frame structure includes a first frame and a second frame. The first frame includes two lateral portions opposite to each other, and a top portion and a bottom portion opposite to each other. A first engaging component is disposed on the lateral portion. The second frame is disposed around the first frame. The second frame includes a top plank and two lateral planks. A position of the top plank corresponds to a position of the top portion, and a position of the lateral plank corresponds to a position of the lateral portion. A second engaging component is disposed on the lateral plank for slidably engaging with the first engaging component.

In an embodiment of the present invention, the first engaging component stretches along a direction from the top portion to the bottom portion, and the first engaging component includes an upper part and a low part according to the direction. The upper part is close to the top portion than the low part. An opening is formed on the upper part to pierce through the lateral portion. A fixing plank is disposed on the low part to fix on the lateral portion. The second engaging component passes through the opening and is slidably engaged with the fixing plank.

In the embodiment of the present invention, the second engaging component includes a connecting plank and a splinting plank. A side of the connecting plank is connected to the lateral plank, and the other side of the connecting plank is connected to the splinting plank. The splinting plank passes through the opening, and the fixing plank is clamped by the splinting plank and the lateral plank.

According to the claimed invention, a display device includes the above-mentioned frame structure and the above-mentioned display module, and the first frame is disposed on a boundary of the display module.

In the embodiment of the present invention, the display module includes a display panel and a backlight module connected to each other. The first frame is disposed on a boundary of the backlight module.

In the embodiment of the present invention, the display device further includes a locking component, a locking hole and a locking plank. The locking hole is formed on the top portion of the first frame, the locking plank is disposed on the top plank of the second frame, and the locking component passes through the locking plank and locks inside the locking hole to fix the top plank on the top portion. Further, the display module includes a back panel opposite to the display panel. The locking hole is further formed on the back panel, the locking plank is disposed on the top plank of the second frame, and the locking component passes through the locking plank and locks inside the locking hole for fixing the top plank on the back panel.

In the embodiment of the present invention, the second frame further includes a bottom plank and a cover plank. A position of the bottom plank corresponds to a position of the bottom portion, and the cover plank is perpendicularly connected to the top plank and the lateral planks substantially. The display panel includes a display surface opposite to the backlight module, and the cover plank covers a boundary of the display surface.

According to the claimed invention, a method of fabricating the display device includes providing the display module, providing the second frame, pulling the lateral planks to align the second engaging component with the first engaging component, releasing the lateral planks to move the second engaging component into the first engaging component so that the lateral plank contacts the lateral portion, and moving the second frame along the direction from the top portion to the bottom portion so as to slide the second engaging component relative to the first engaging component for engaging the second engaging component with the first engaging component.

In the embodiment of the present invention, the method further includes pulling the lateral planks to align the second engaging component with an opening formed on the first engaging component, releasing the lateral planks to move the splinting plank of the second engaging component to pass through the opening and to contact the lateral plank against the lateral portion, and moving the second frame along the direction from the top portion to the bottom portion so as to slide the splinting plank along the direction for clamping the fixing plank by the splinting plank and the lateral plank and contacting the connecting plank against the fixing plank.

In the embodiment of the present invention, the second engaging component sliding relative to the first engaging component for engaging the second engaging component with the first engaging component includes locking the top plank of the second frame with the top portion of the first frame to fix the top plank on the top portion, or locking the top plank of the second frame with a back panel of the display module to fix the top plank on the back panel.

The present invention provides the frame structure, the display device with the frame structure, and the method of fabricating the display device that can decrease the thickness of the first frame to form the thin-typed frame design for preferred aesthetic, and the lateral portion of the first frame can slide relative to the lateral plank of the second frame in an engagement manner, so as to decrease labor assembling hours and manufacturing cost.

These and other objectives of the present invention will no doubt become obvious to those of ordinary skill in the art after reading the hollowing detailed description of the preferred embodiment that is illustrated in the various figures and drawings.

### Brief Description of the Drawings

FIG.1 is an exploded diagram of a display device according to a preferred embodiment of the present invention.
FIG.2 is an enlarged diagram of the display device shown in FIG.1 according to the preferred embodiment of the present invention.
FIG.3 is a diagram of a first step of assembly procedures according to the embodiment of the present invention.
FIG.4 is a diagram of a second step of the assembly procedures according to the embodiment of the present invention.
FIG.5 is a diagram of a third step of the assembly procedures according to the embodiment of the present invention.
FIG.6 is a back view of the display device according to the preferred embodiment of the present invention.
FIG.7 is a flow chart of the method of fabricating the display device according to the embodiment of the present invention.

### Detailed Description

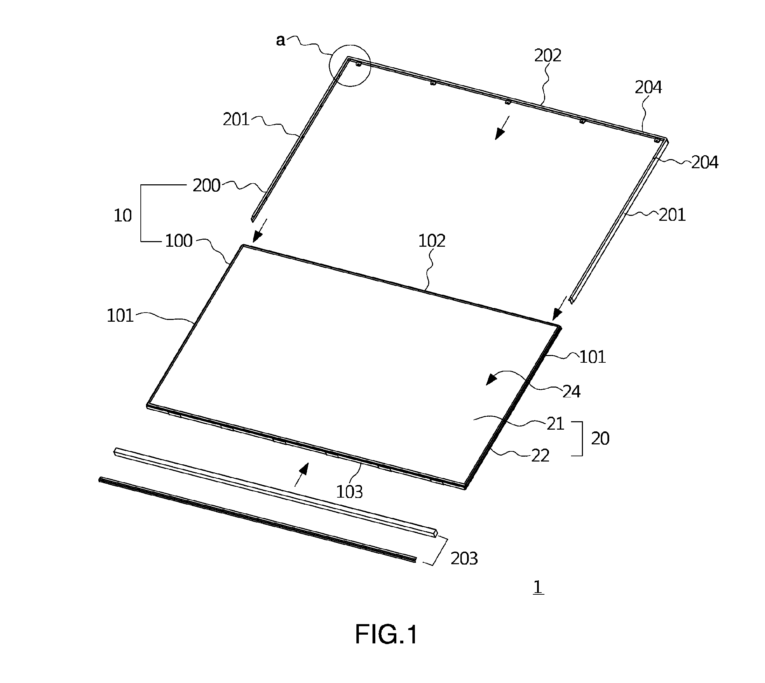

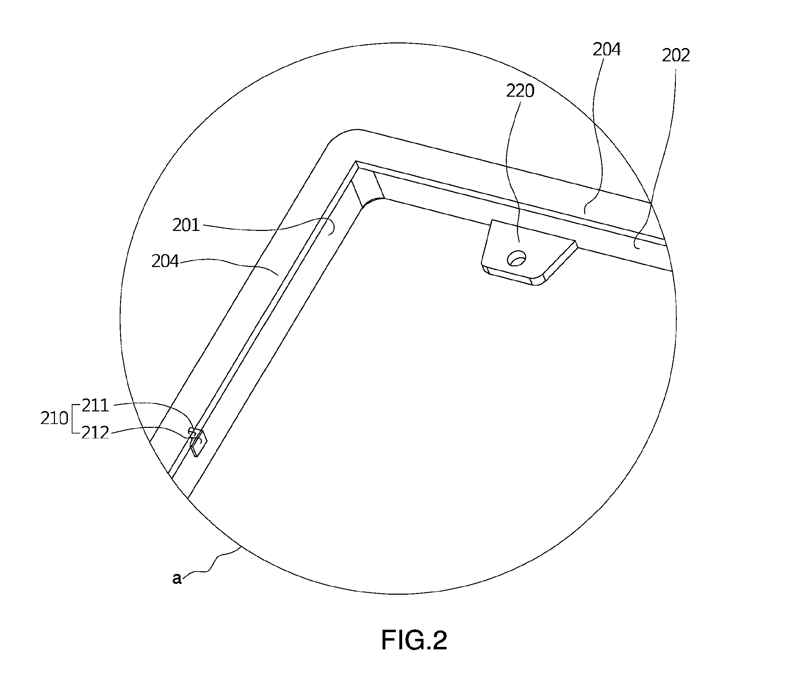

Please refer to FIG.1 and FIG.2. FIG.1 is an exploded diagram of a display device according to a preferred embodiment of the present invention. FIG.2 is an enlarged diagram of the display device shown in FIG.1 according to the preferred embodiment of the present invention. FIG.2 shows an enlarged area "a" shown in FIG.1. The display device 1 includes a frame structure 10 and a display module 20. The frame structure 10 includes a first frame 100 and a second frame 200. The display module 20 includes a display panel 21 and a backlight module 22 connected to each other. The first frame 100 is disposed on a boundary of the backlight module 22. In the embodiment, the first frame 100 is a middle frame of the backlight module 22 and is made of plastic material for fixing components of the backlight module 22.

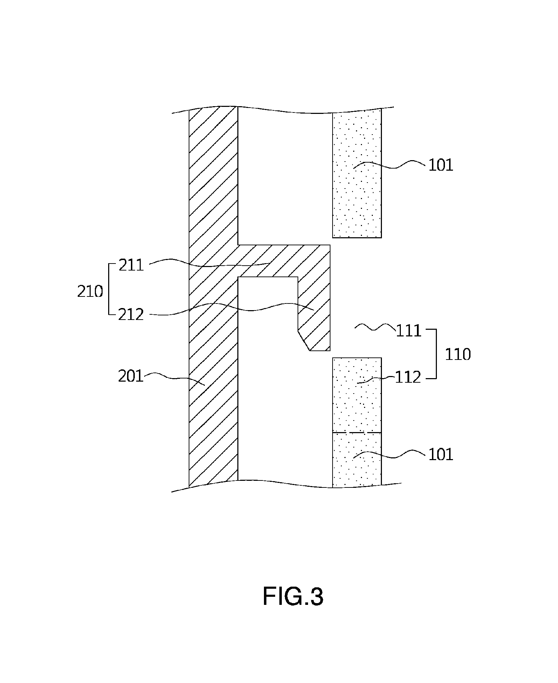

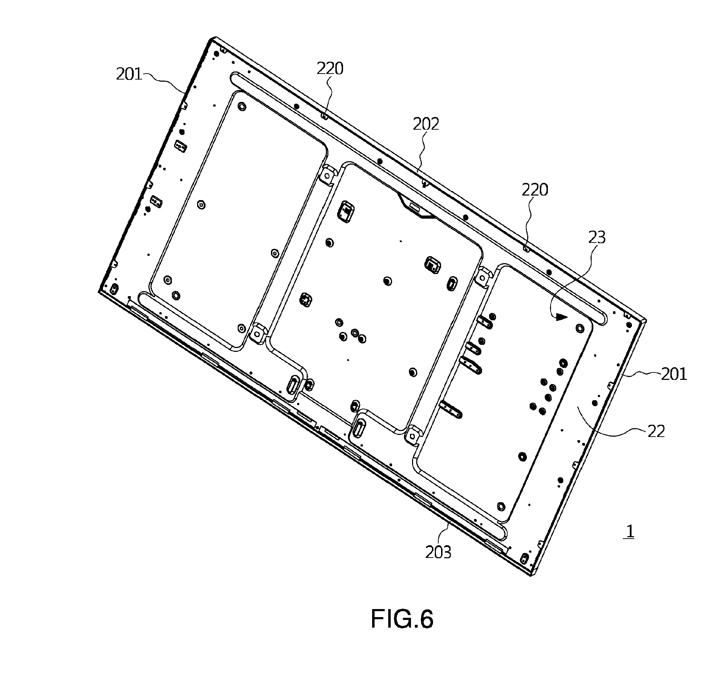

Please refer to FIG.3 and FIG.6. FIG.3 is a diagram of a first step of assembly procedures according to the embodiment of the present invention. FIG.6 is a back view of the display device according to the preferred embodiment of the present invention. FIG.3 is a sectional view of the first engaging component and the second engaging component, and the other components are omitted for simplicity. The first frame 100 includes two lateral portions 101 opposite to each other, and further includes a top portion 102 and a bottom portion 103 opposite to each other. The first engaging component 1 10 is disposed on the lateral portion 101. The first engaging component 110 stretches along the direction from the top portion 102 to the bottom portion 103, and the first engaging component 1 10 can be divided into an upper part and a low part (not shown in figures) according to the direction. The upper part is close to the top portion 102 than the low part. An opening 111 is formed on the upper part to pierce through the lateral portion 101. A fixing plank 112 is disposed on the low part to fix on the lateral portion 101.

The second frame 200 is disposed around the first frame 100. The second frame 200 includes two lateral planks 201 opposite to each other, and further includes a top plank 202 and a bottom plank 203 opposite to each other. A position of the top plank 202 corresponds to a position of the top portion 102, a position of the lateral plank 201 corresponds to a position of the lateral portion 101, and a position of the bottom plank 203 corresponds to a position of the bottom portion 103. The second engaging component 210 is disposed on an inner of the lateral plank 201 for slidably engaging with the first engaging component 110. The second engaging component 210 includes a connecting plank 211 and a splinting plank 212. A side of the connecting plank 211 is connected to the lateral plank 201, and the other side of the connecting plank 211 is connected to the splinting plank 212, so the second engaging component 210 has an L-shaped section. The splinting plank 21 2 can pass through the opening 111, and the fixing plank 112 is clamped by the splinting plank 212 and the lateral plank 201. A guiding angle structure is formed on a corner of the splinting plank 21 2 opposite to the connecting plank 211.

The display panel 21 includes a display surface 24 disposed on a side of the display panel 21 opposite to the backlight module 22. A cover plank 204 is perpendicularly connected to the top plank 202 and the lateral planks 201 substantially. The cover plank 204 covers a boundary of the display surface 24. The backlight module 22 includes a back panel 23 disposed on a side of the backlight module 22 opposite to the display panel 21. In the embodiment, a locking plank 220 is disposed on the top plank 202 of the second frame 200, a locking hole (not shown in figures) is formed on the back panel 23, and the display device 1 further includes a locking component corresponding to the locking plank 220 and the locking hole. The locking component can be a screw, which passes through a hole on the locking plank 220 and is locked inside the locking hole on the back panel 23 for fixing the top plank 202 on the back panel 23. In the other embodiment, the locking hole can be formed on the top portion of the first frame, the locking plank can be disposed on the top plank of the second frame, or a hole is formed on the top plank, so that the locking component passes through the locking plank or through the hole on the top plank and to lock inside the locking hole on the top portion for fixing the top plank on the top portion.

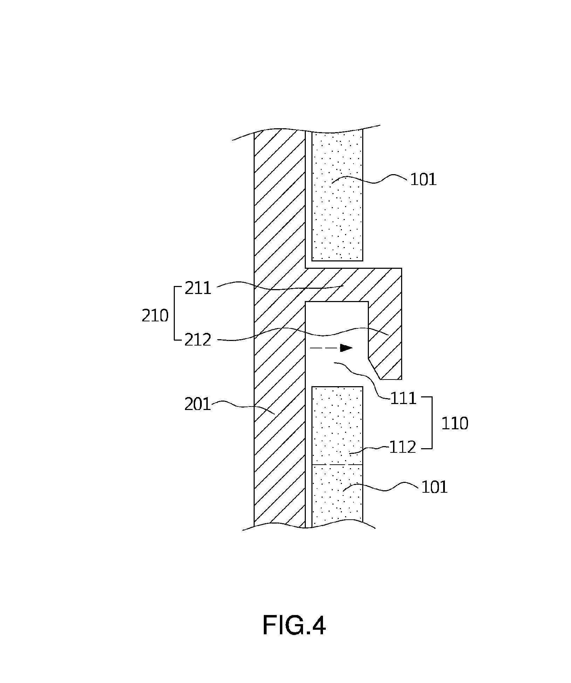

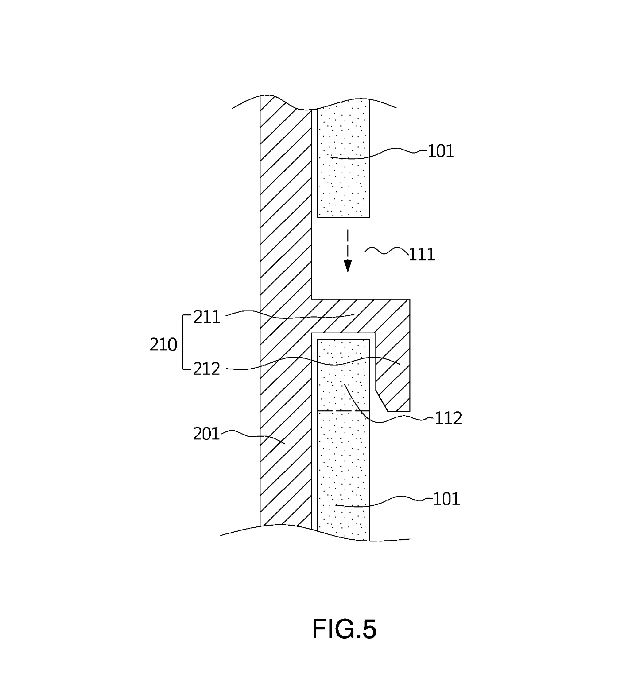

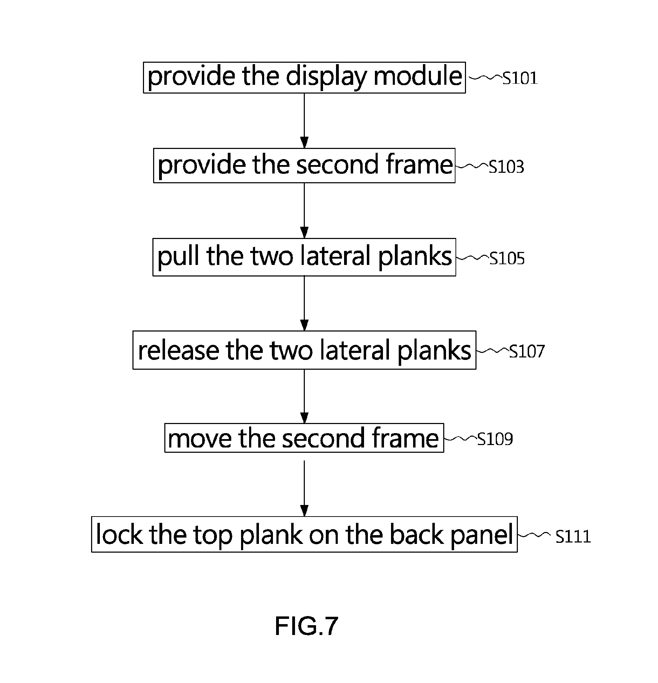

Please refer to FIG.4, FIG.5 and FIG.7. FIG.4 is a diagram of a second step of the assembly procedures according to the embodiment of the present invention. FIG.5 is a diagram of a third step of the assembly procedures according to the embodiment of the present invention. FIG.7 is a flow chart of the method of fabricating the display device according to the embodiment of the present invention. The detailed assembly procedures between the first engaging component 110 and the second engaging component 210 are respectively shown in FIG.3 to FIG.5. As hollowing, the method of fabricating the display device 1 is introduced in FIG.7, and can be applied to the display device 1 and related components shown in FIG.1 to FIG.6.

The display module 20 is provided in Step 101. The display module 20 includes the display panel 21 and the backlight module 22 assembled with each other, and the first frame 100 is disposed on the boundary of the backlight module 22. The second frame 200 is provided in Step 103, so as to align the second frame 200 with the first frame 100 transversely, and to align the lateral portion 101 with the lateral plank 201, as shown in FIG.1. The two lateral planks 201 are pulled in Step 105 to increase an interval between the lateral planks 201 for disposing into the lateral portions 101. Then, the second frame 200 moves toward the bottom portion 103 to align the splinting plank 212 of the second engaging component 210 with the opening 111 on the first engaging component 1 10, as shown in FIG.3. The lateral planks 201 is released in Step 107, the splinting plank 212 moves into the opening 111 and the lateral plank 201 contacts against the lateral portion 101, as shown in FIG.4.

The second frame 200 is moved in Step 109. The second frame 200 moves along the direction from the top portion 102 to the bottom portion 103, the second engaging component 210 slides relative to the first engaging component 110, the splinting plank 212 moves toward the bottom portion 103, and the connecting plank 211 contacts against the fixing plank 112. Meanwhile, the first engaging component 110 is engaged with the second engaging component 210, which means the fixing plank 112 is clamped by the splinting plank 212 and the lateral plank 201, as shown in FIG.5. The top portion 202 of the second frame 200 is locked with the back panel 23 of the backlight module 22 in Step 111. Relative position between the top plank 202 and the top portion 102 is immovable, the second frame 200 can not be separated along the direction from the bottom portion 103 to the top portion 102, and the first engaging component 110 is engaged with the second engaging component 210, so that the first frame 100 is fixed on the second frame 200 stably. Final, the bottom plank 203 is disposed on the frame vertically or transversely, and is further fixed in a locking manner or an engaging manner.

In conclusion, the present invention provides the frame structure, the display device with the frame structure, and the method of fabricating the display device that can decrease the thickness of the first frame and the second frame to form the thin-typed design for preferred aesthetic. Further, the lateral portion of the first frame can slide relative to the lateral plank of the second frame in the slidably engaging manner, so as to decrease the labor assembling hours and the manufacturing cost. Besides, appearance of the frame structure can be varied by different bottom planks, which is not limited by the thin-typed design.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A frame structure comprising:
a first frame, the first frame comprising two lateral portions opposite
to each other, and a top portion and a bottom portion opposite to each other, a first engaging component being disposed on the lateral portion; and
a second frame disposed around the first frame, the second frame
comprising a top plank and two lateral planks, a position of the top plank corresponding to a position of the top portion, a position of the lateral plank corresponding to a position of the lateral portion, a second engaging component being disposed on the lateral plank for slidably engaging with the first engaging component.

2. The frame structure of claim 1, wherein the first engaging component stretches along a direction from the top portion to the bottom portion, the first engaging component comprises an upper part and a low part according to the direction, the upper part is close to the top portion than the low part, an opening is formed on the upper part to pierce through the lateral portion, a fixing plank is disposed on the low part to fix on the lateral portion, the second engaging component passes through the opening and is slidably engaged with the fixing plank.

3. The frame structure of claim 2, wherein the second engaging component comprises a connecting plank and a splinting plank, a side of the connecting plank is connected to the lateral plank, the other side of the connecting plank is connected to the splinting plank, the splinting plank passes through the opening, and the fixing plank is clamped by the splinting plank and the lateral plank.

4. A display device comprising:
a frame structure as defined in anyone of claims 1 to 3, and
a display module, the first frame of the frame structure being
disposed on a boundary of the display module.

5. The display device of claim 4, wherein the display module comprises a display panel and a backlight module connected to each other, the first frame is disposed on a boundary of the backlight module.

6. The display device of claim 5, wherein the display device further comprises a locking component, a locking hole and a locking plank, the locking hole is formed on the top portion of the first frame, the locking plank is disposed on the top plank of the second frame, the locking component passes through the locking plank and locks inside the locking hole to fix the top plank on the top portion; or the display module comprises a back panel opposite to the display panel, the locking hole is formed on the back panel, the locking plank is disposed on the top plank of the second frame, the locking component passes through the locking plank and locks inside the locking hole to fix the top plank on the back panel.

7. The display device of claim 5, wherein the second frame further comprises a bottom plank and a cover plank, a position of the bottom plank corresponds to a position of the bottom portion, the cover plank is perpendicularly connected to the top plank and the lateral planks substantially, the display panel comprises a display surface opposite to the backlight module, and the cover plank covers a boundary of the display surface.

8. A method of fabricating a display device as defined in anyone of claims 4 to 7, the method comprising:
providing a display module, wherein a first frame is disposed on a
boundary of the display module, the first frame comprises two lateral portions opposite to each other, and a top portion and a bottom portion opposite to each other, a first engaging component is disposed on the lateral portion;
providing a second frame, wherein the second frame comprises a top
plank and two lateral planks, a position of the top plank corresponds to a position of the top portion, a position of the lateral plank corresponds to a position of the lateral portion, a second engaging component is disposed on the lateral plank;
pulling the lateral planks to align the second engaging component
with the first engaging component;
releasing the lateral planks to move the second engaging component
into the first engaging component so that the lateral plank contacts the lateral portion; and
moving the second frame along a direction from the top portion to
the bottom portion so as to slide the second engaging component relative to the first engaging component for engaging the second engaging component with the first engaging component.

9. The method of claim 8, for a display device having a frame structure as defined in claim 3, further comprising:
pulling the lateral planks to align the second engaging component
with an opening formed on the first engaging component, wherein the first engaging component comprises an upper part and a low part according to the direction, the upper part is close to the top portion than the low part, the opening is formed on the upper part to pierce through the lateral portion, a fixing plank is disposed on the low part to fix on the lateral portion;
releasing the lateral planks to move a splinting plank of the second
engaging component to pass through the opening and to contact the lateral plank against the lateral portion, wherein the second engaging component further comprises a connecting plank, a side of the connecting plank is connected to the lateral plank, and the other side of the connecting plank is connected to the splinting plank; and
moving the second frame along the direction from the top portion to
the bottom portion so as to slide the splinting plank along the direction for clamping the fixing plank by the splinting plank and the lateral plank and contacting the connecting plank against the fixing plank.

10. The method of claim 9, wherein the second engaging component sliding relative to the first engaging component for engaging the second engaging component with the first engaging component comprising:
locking the top plank of the second frame with the top portion of the
first frame to fix the top plank on the top portion; or
locking the top plank of the second frame with a back panel of the
display module to fix the top plank on the back panel.
